# EUROPÄISCHE PATENTSCHRIFT

(11) **EP 3 119 625 B1**
(45) Veröffentlichungstag und Bekanntmachung des Hinweises auf die Patenterteilung: **13.06.2018**
(21) Anmeldenummer: 15705324.0
(22) Anmeldetag: 20.02.2015
(51) Int. Cl.: B60K 1/00

(54) **STARRACHSENANORDNUNG MIT IN FAHRZEUGQUERRICHTUNG SICH ERSTRECKENDEM ACHSKÖRPER**
RIGID AXLE ARRANGEMENT HAVING AN AXLE BEAM WHICH EXTENDS IN THE VEHICLE TRANSVERSE DIRECTION
ENSEMBLE D'ESSIEUX RIGIDES COMPRENANT UN CORPS D'ESSIEU S'ÉTENDANT DANS LE SENS TRANSVERSAL D'UN VÉHICULE

(30) Priorität: 19.03.2014 DE 102014205135
(43) Veröffentlichungstag der Anmeldung: 25.01.2017
(73) Patentinhaber: ZF Friedrichshafen AG, 88046 Friedrichshafen (DE)
(72) Erfinder: KONTERMANN, Peter, 49090 Osnabrück (DE)
(86) Internationale Anmeldenummer: PCT/EP2015/053584
(87) Internationale Veröffentlichungsnummer: WO 2015/139913

(56) Entgegenhaltungen:
- EP-A1- 2 505 405
- CN-U- 201 440 626
- CN-U- 201 613 819
- CN-U- 202 034 850
- DE-A1-102009 004 465
- DE-T5-112012 001 484
- FR-A- 366 865
- US-A- 1 500 160
- US-A- 4 697 660

## Beschreibung

Die vorliegende Erfindung betrifft eine Starrachsenanordnung, insbesondere für eine antreibbare Hinterachse eines Kraftfahrzeugs, gemäß der im Oberbegriff des Patentanspruchs 1 näher definierten Art.

Aus der gattungsbildenden DE 10 2009 004 465 A1 ist eine angetriebene starre Hinterachse für Mehrspurfahrzeuge bekannt, die als kompakte Einheit ausgebildet ist. Hierbei bildet ein Elektromotor zusammen mit einem Differential ein geschlossenes Bauteil aus. Dieses geschlossene Bauteil ist fest mit der Achse verschraubt. Des Weiteren stützt sich dieses Bauteil zusammen mit der Achse an zwei bis drei Gelenkpunkten sowie zwei Federelementen an der Karosserie ab.

Aus der DE 2 505 405 A1, DE 11 2012 001484 T5, CN 202 034 850 U, CN 201 613 819 U und CN 201 440 626 U ist jeweils eine Starrachsanordnung bekannt, die einen Achskörper mit einem Innenraum aufweist, wobei der Achskörper aus mindestens zwei Bauteilen zusammengesetzt ist. Beispielsweise sind die Bauteile des Achskörpers mittels Schweißnähten oder Schraubverbindungen miteinander gefügt.

Die der Erfindung zu Grunde liegende Aufgabe wird durch die Merkmale des Patentanspruchs 1 gelöst. Weitere vorteilhafte Ausgestaltungen ergeben sich aus den Unteransprüchen und den Zeichnungen.

Es wird eine Starrachsenanordnung vorgeschlagen, wobei diese Starrachsenanordnung vorzugsweise für eine antreibbare Hinterachse eines Kraftfahrzeuges vorgesehen ist. Die Starrachsenanordnung umfasst einen, insbesondere einzigen, Elektromotor und eine Getriebeeinheit. Die Getriebeeinheit ist dem Elektromotor vorzugsweise nachgeschaltet. Des Weiteren umfasst die Starrachsenanordnung zwei Antriebswellen. Diese Bauteile bilden vorzugsweise im Wesentlichen die starre Achse der Starrachsenanordnung aus. Die Antriebswellen erstrecken sich in Fahrzeugquerrichtung, insbesondere zueinander koaxial, zwischen einem dafür vorgesehenen ersten und zweiten Rad. Im Bereich ihrer jeweils zugewandten Enden sind die beiden Antriebswellen über ein Differential miteinander verbunden. Im Bereich ihrer jeweils voneinander abgewandten freien Enden sind die beiden Antriebswellen drehfest mit dem jeweils dafür vorgesehenen Rad verbindbar. Hierdurch kann das von dem Elektromotor erzeugt Drehmoment zum Antreiben der dafür vorgesehenen Räder über die Getriebeeinheit, an das Differential und von dort aus an die beiden Antriebswellen übertragen werden. Des Weiteren umfasst die Starrachsenanordnung einen sich in Fahrzeugquerrichtung zwischen den beiden Rädern erstreckenden Achskörper. Dieser Achskörper ist über zumindest einen, vorzugsweise mehrere Lenker mit einem dafür vorgesehenen Aufbau oder Hilfsrahmen, insbesondere des dafür vorgesehenen Kraftfahrzeuges, gelenkig verbindbar. Des Weiteren nimmt der Achskörper in seinem Inneren die beiden Antriebswellen drehbar auf. Der Achskörper ist somit insbesondere als Hohlkörper ausgebildet.

Der Achskörper erstreckt sich in Fahrzeugquerrichtung einteilig - d.h. ohne form-, stoff- und/oder kraftschlüssige Verbindungsbereiche - vom Bereich des freien Endes der einen Antriebswelle bis in den Bereich des freien Endes der anderen Antriebswelle. Des Weiteren ist der Achskörper derart ausgebildet, dass in seinem Inneren der Elektromotor, die Getriebeeinheit und das Differential aufnehmbar bzw. aufgenommen sind. Hierdurch kann vorteilhafterweise ein sich in Fahrzeugquerrichtung durchgängig erstreckender Achskörper ausgebildet werden, der eine hohe Stabilität aufweist, so dass auf zusätzliche Versteifungen verzichtet werden kann. Somit kann wiederum Gewicht eingespart werden, so dass die Starrachsenanordnung im Vergleich zu aus dem Stand der Technik bekannten Lösungen ein sehr geringes Gewicht aufweist. Des Weiteren wird der Montageaufwand der Starrachsenanordnung reduziert, da nicht mehrere Einzelteile aufwändig zu einer sich über die gesamte Fahrzeugquerrichtung erstreckende Achse verbinden werden müssen. Stattdessen wird diese tragende Struktur durch den sich über die gesamte Fahrzeugquerrichtung erstreckenden Achskörper ausgebildet, so dass letztendlich nur noch die Antriebskomponenten, d.h. der Elektromotor, die Getriebeeinheit, das Differential und/oder die beiden Antriebswellen in den Innenraum des Achskörpers eingebaut werden müssen. Zusammenfassend ist demnach festzustellen, dass mittels der vorstehend genannten Starrachsenanordnung eine sehr leichte und kostengünstige, antreibbare Achse, insbesondere Hinterachse eines Kraftfahrzeuges, ausgebildet werden kann.

Vorteilhaft ist es, wenn der Achskörper einen, insbesondere rohrförmigen, ersten und zweiten Außenabschnitt aufweist. In diesen ist jeweils eine der beiden Antriebswellen zumindest teilweise aufgenommen. Die beiden Außenabschnitte dienen unteranderem zum Schutz der beiden Antriebswellen vor chemischen und/oder mechanischen Störeinflüssen. Des Weiteren übernehmen die beiden Außenabschnitte eine tragende Funktion, um die Starrachsenanordnung an dem dafür vorgesehenen Aufbau oder Hilfsrahmen mittelbar über mehrere Lenker oder unmittelbar gelenkig abstützen zu können.

Hierdurch können die beiden Antriebswellen von auftretenden Stützkräften entkoppelt werden.

Konstruktiv einfach kann die Starrachsenanordnung umgesetzt werden, wenn die beiden Außenabschnitte zueinander koaxial ausgebildet sind.

Des Weiteren ist es vorteilhaft, wenn der Achskörper einen Zwischenabschnitt aufweist. In diesem sind vorzugsweise der Elektromotor, die Getriebeeinheit und/oder das Differential angeordnet. Durch diesen, im Vergleich zu den Außenabschnitten voluminöser ausgebildeten Zwischenabschnitt, können die beiden Außenabschnitte und der Zwischenabschnitt geometrisch optimal dahingehend ausgebildet werden, dass der die beiden Außenabschnitten und den Zwischenabschnitt aufweisende Achskörper in Fahrzeugquerrichtung eine maximale Festigkeit aufweist und zugleich die gesamte Antriebseinheit, d. h. der Elektromotor, die Getriebeeinheit, das Differential und/oder die beiden Antriebswellen, geschützt im inneren bzw. im Innenraum des als Hohlkörper ausgebildeten Achskörpers aufnehmbar sind.

Diesbezüglich ist es ferner vorteilhaft, wenn der Zwischenabschnitt in Fahrzeugquerrichtung, insbesondere im Wesentlichen fahrzeugmittig, zwischen den beiden Außenabschnitten angeordnet ist. Hierdurch kann eine optimale Gewichtsverteilung der Starrachsenanordnung erzielt werden.

Vorteilhaft ist es, wenn der Elektromotor als Hochdrehzahl-Elektromotor, vorzugsweise als Asynchron-Elektromotor (-maschine) oder als permanent erregter Synchron-Elektromotor /-maschine) ausgebildet ist und vorzugsweise in Verbindung mit einem Hochdrehzahlkonzept verwendet wird. Hierdurch können wiederum die Herstellungskosten der Starrachsenanordnung reduziert werden, da diese Elektromotoren keine Permanentmagnete benötigen und somit keine Metalle der seltenen Erden (englisch: REE - rare earth elements) aufweisen und zugleich trotzdem eine hohe Energiedichte besitzen.

Wenn hier von einem Hochdrehzahl-Elektromotor gesprochen wird, so ist damit ein Elektromotor gemeint, der für eine Betriebsdrehzahl von über 10.000 Umdrehungen pro Minute, insbesondere 20.000-30.000 Umdrehungen pro Minute ausgelegt ist. Eine Leistungselektronik sorgt für die Steuerung des Motors bzw. dessen kontrollierte Drehzahl, die abhängig vom Leistungsbedarf zur Verfügung gestellt werden kann.

Des Weiteren ist es vorteilhaft, wenn die Starrachsenanordnung nur einen einzigen Elektromotor aufweist, mittels dem beide Antriebswellen antreibbar sind. Hierdurch können die Herstellungskosten der Starrachsenanordnung zusätzlich reduziert werden.

Um den Elektromotor, die Getriebeeinheit, das Differential und/oder zumindest teilweise die Antriebswellen im Innenraum des Achskörpers aufnehmen zu können, ist es vorteilhaft, wenn der Innenraum des Achskörpers im Bereich des Zwischenabschnitts eine größere Breite und/oder Höhe aufweist als im Bereich der Außenabschnitte. Hierbei ist unter dem Begriff "Breite" die Ausdehnung des Zwischenabschnitts in Fahrzeuglängsrichtung und unter dem Begriff "Höhe" die Ausdehnung des Zwischenabschnitts in Fahrzeughochrichtung zu verstehen.

Um eine ausreichende Untersetzung der vom Elektromotor erzeugten Antriebskraft vornehmen zu können, ist es vorteilhaft, wenn die Getriebeeinheit ein Übersetzungsgetriebe, insbesondere ein Planetengetriebe, zur Anpassung des Übersetzungsverhältnisses umfasst. Zusätzlich oder alternativ ist es ferner vorteilhaft, wenn die Getriebeeinheit ein, insbesondere dem Planetengetriebe nachgeschaltetes Übertragungsgetriebe aufweist, mittels dem das Drehmoment der Motordrehachse auf das Differential und/oder die beiden Antriebswellen übertragbar ist. Hierbei ist das Übertragungsgetriebe vorzugsweise als Stirnradgetriebe und/oder als Winkelgetriebe ausgebildet.

Der Achsantrieb ist vorzugsweise derart gestaltet, dass eine Gesamtübersetzung iGesamt von etwa 14 bis 24, vorzugsweise von ca. 20 realisiert wird. Das daraus resultierende Hochdrehzahlkonzept der elektrischen Maschine wird dadurch erreicht, dass der Planetenradsatz eine Übersetzung iP von etwa 3 bis 6, vorzugsweise von ca. 5 und die Stirnradstufe eine Übersetzung iS von etwa -2 bis -6, vorzugsweise von ca. -4 aufweist. Darüber hinaus sind die Elemente des Planetenradsatzes und die Elemente der Stirnradstufe vorzugsweise schrägverzahnt ausgeführt, um hinsichtlich der Geräuschentwicklung eine vorteilhafte und gegenüber Geradverzahnung geräuschärmere Variante bereitzustellen.

Die Verzahnungspaare des Planetenradsatzes und der Stirnradstufe sind derart gestaltet, dass jeweils eine Sprungüberdeckung εβ von etwa größer 2 vorzugsweise von ca. 2,2 vorgesehen ist. Dadurch wird sichergestellt, dass bei jedem Verzahnungspaar zumindest zwei Zähne gleichzeitig im Eingriff stehen, wodurch besonders geräuscharme Verzahnungen realisiert werden.

In einer vorteilhaften Weiterbildung der Erfindung ist der Elektromotor gegenüber zumindest einer der beiden Antriebswellen derart angeordnet, dass dessen Motordrehachse parallel und/oder in Fahrzeuglängsrichtung oder Fahrzeughochrichtung beabstandet zur Wellendrehachse der beiden Antriebswellen ausgerichtet ist. Vorteilhafterweise kann hierdurch der in Fahrzeuglängsrichtung benötigte Bauraum der Starrachsenanordnung reduziert werden. Des Weiteren kann bei einer derartigen Anordnung des Elektromotors das Übertragungsgetriebe als Stirnradgetriebe ausgebildet werden, wodurch wiederum im Vergleich zu einem Winkelgetriebe der Wirkungsgrad der Antriebseinheit erhöht werden kann.

Alternativ dazu ist es auch vorteilhaft, wenn der Elektromotor gegenüber zumindest einer der beiden Antriebswellen derart angeordnet ist, dass dessen Motordrehachse winklig, insbesondere lotrecht, zur Wellendrehachse zumindest einer der beiden Antriebswellen ausgerichtet ist. Hierdurch kann vorteilhafterweise der Bauraum des Zwischenabschnitts des Achskörpers in Fahrzeugquerrichtung reduziert werden. Bei einer derartigen Anordnung des Elektromotors ist das Übertragungsgetriebe vorzugsweise als Winkelgetriebe ausgebildet.

Vorteilhaft ist es, wenn der Elektromotor lösbar an der Innenseite des Achskörpers im Zwischenabschnitt befestigt ist.

Auch ist es vorteilhaft, wenn der Achskörper im Bereich des Zwischenabschnitts eine Öffnung, insbesondere zur Montage und/oder Wartung des Elektromotors, der Getriebeeinheit und/oder des Differentials, aufweist. Diese ist vorzugsweise derart ausgebildet, dass die Stabilität des Achskörpers, insbesondere in Fahrzeughochrichtung, nicht geschwächt wird. Hierfür ist die Öffnung vorzugsweise in Fahrzeuglängsrichtung orientiert.

Vorzugsweise ist die Wanddicke des Achskörpers im Zwischenabschnitt dünner ausgebildet als im Bereich der beiden Außenabschnitte. Hierdurch kann ohne die Struktur des Achskörpers zu schwächen, das Gewicht der Starrachsenanordnung, insbesondere des Achskörpers reduziert werden.

Die vorstehend beschriebene, elektrisch angetriebene Starrachse, die insbesondere die beiden Antriebswellen umfasst, hat insbesondere den Vorteil, dass diverse Komponenten konventioneller Antriebsstränge, insbesondere Kardanwellen, Kardangelenke, Mittelgetriebe, Lagerungen und/oder ein Mitteldifferential, eingespart werden können. Des Weiteren eignet sich die elektrisch antreibbare Hinterachse vorzugswelse dazu, um elektrisch Bremsenergie zurückzugewinnen. Des Weiteren kann bei einer Hybrid-Anwendung, d.h. bei eine Kombination von Elektro- und Verbrennungsmotor, vorteilhafterweise der hierbei zusätzlich verwendete Verbrennungsmotor kleiner dimensioniert werden.

Vorteilhaft ist es, wenn das Übersetzungsgetriebe der Getriebeeinheit mehrere hintereinander geschaltete Stirnradstufe und/oder Planetenstufen umfasst.

Nachfolgend ist die Erfindung anhand einer Zeichnung näher erläutert. Es zeigt:

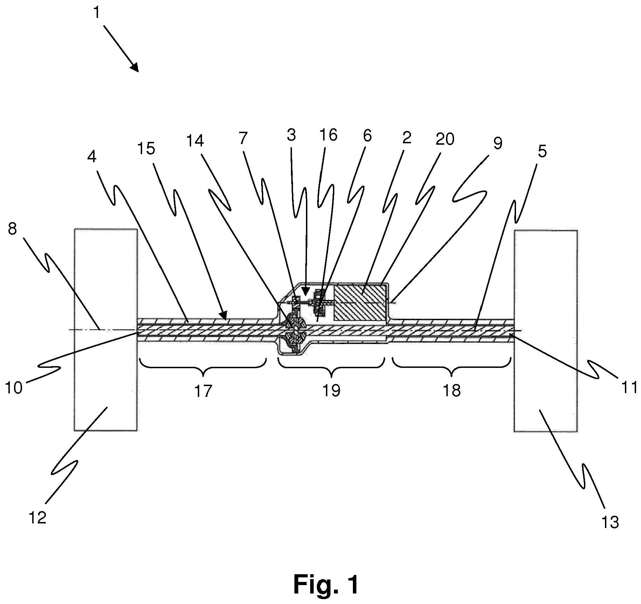

Figur 1 eine Längsschnittansicht einer Starrachsenanordnung mit einem tragenden und die Antriebseinheit aufnehmenden Achskörper.

Figur 1 zeigt eine Starrachsenanordnung 1 in einer Querschnittsansicht, wobei diese sowohl als Draufsicht als auch gemäß einem alternativen Ausführungsbeispiel als Rückansicht zu interpretieren ist. Die Starrachsenanordnung 1 ist als eine elektromotorisch antreibbare Achse, insbesondere Hinterachse eines Kraftfahrzeuges, ausgebildet. Hierfür umfasst die Starrachsenanordnung einen Elektromotor 2, eine Getriebeeinheit 3 und eine die Starrachse ausbildende erste und zweite Antriebswelle 4, 5.

Die Getriebeeinheit 3 umfasst ein Übersetzungsgetriebe 6 und ein Übertragungsgetriebe 7. Das Übersetzungsgetriebe 6 ist in dem vorliegenden Ausführungsbeispiel als Planetengetriebe ausgebildet und sorgt in Kombination mit dem Übertragungsgetriebe 7 für die gewünschte Untersetzung der Antriebskraft. Alternativ kann das Übersetzungsgetriebe 6 auch ebenso als Stirnradstufe ausgebildet sein. Des Weiteren ist es ebenso denkbar, dass nicht nur ein einziges Übersetzungsgetriebe 6 angeordnet ist, sondern mehrere, die sowohl als Planetengetriebe als auch als Stirnradgetriebe ausgebildet sein können.

Gemäß dem in Figur 1 dargestellten Ausführungsbeispiel sind die beiden Antriebswellen 4, 5 zueinander koaxial auf einer gemeinsamen Wellendrehachse 8 drehbar angeordnet. Der Elektromotor 2 ist parallel zu den beiden Antriebswellen 4, 5 angeordnet. Infolgedessen ist die Motordrehachse 9 des Elektromotors 2 parallel zur Wellendrehachse 8 orientiert. Zur Drehmomentübertragung vom Elektromotor 2 auf die beiden Antriebswellen 4, 5 ist das Übertragungsgetriebe 7 gemäß dem vorliegenden Ausführungsbeispiel als Stirnradgetriebe ausgebildet. Alternativ ist es aber auch ebenso denkbar, dass der Elektromotor 2 gemäß einem hier nicht dargestellten Ausführungsbeispiel in Fahrzeuglängsrichtung oder Fahrzeughochrichtung orientiert ist, so dass sich dessen Motordrehachse 9 lotrecht zur Wellendrehachse 8 erstreckt. In diesem Fall würde das Übertragungsgetriebe 7 vorzugsweise als Winkelgetriebe ausgebildet sein.

Die beiden Antriebswellen 4, 5 sind im Bereich ihres jeweils freien Endes 10, 11 drehfest mit einem jeweiligen Rad 12, 13 verbunden. Mit ihren jeweils zugewandten Enden sind die beiden Antriebswellen 4, 5 über ein Differential 14 miteinander gekoppelt. Das Differential 14 steht wiederum in Wirkverbindung mit dem Übertragungsgetriebe 7.

Zum Antreiben der Räder 12, 13 wird das vom Elektromotor 2 erzeugte Drehmoment über das Übersetzungsgetriebe 6 mittels des Übertragungsgetriebes 7 auf das Differential 14 übertragen. Von diesem wird die Antriebskraft weiter auf die beiden Antriebswellen 4, 5 übertragen, die letztendlich die mit diesem drehfest verbundenen Räder 12, 13 antreiben.

Die Starrachsenanordnung 1 umfasst ferner einen Achskörper 15. Der Achskörper 15 erstreckt sich in Fahrzeugquerrichtung vom Bereich des ersten freien Endes 10 der ersten Antriebswelle 4 bis in den Bereich des zweiten freien Endes 11 der zweiten Antriebswelle 5 durchgängig als ein tragendes Teil. Der Achskörper 15 ist mittels mehrerer in Figur 1 nicht dargestellter Lenker - insbesondere zumindest zweier Längslenker - an einem hier ebenfalls nicht dargestellten Aufbau oder Hilfsrahmen des Kraftfahrzeugs angelegt. Des Weiteren ist der Achskörper 15 als Hohlkörper ausgebildet. In seinem Innenraum 16 nimmt dieser die Antriebseinheit im Wesentlichen vollständig auf. Gemäß dem in Figur 1 dargestellten Ausführungsbeispiel umfasst die Antriebseinheit den Elektromotor - insbesondere einen Asynchronen-Elektromotor und/oder Hochdrehzahl-Elektromotor - das Übersetzungsgetriebe 6, das Übertragungsgetriebe 7, das Differential 14, die erste Antriebswelle 4 und/oder die zweite Antriebswelle 5.

Der Achskörper 15 weist einen ersten und zweiten Außenabschnitt 17, 18 auf. Diese sind rohrförmigen ausgebildet und/oder zueinander koaxial zur Wellendrehachse 8 angeordnet. Des Weiteren umfasst der Achskörper 15 einen Zwischenabschnitt 19, der zwischen den beiden Außenabschnitten 17, 18 angeordnet ist. Der Zwischenabschnitt 19 bildet ein Gehäuse 20 aus. Im Innenraum 16 des Zwischenabschnitts 19 bzw. des Gehäuses 20 ist die Antriebseinheit angeordnet. Gemäß dem vorliegenden Ausführungsbeispiel umfasst diese den Elektromotor 2, das Übersetzungsgetriebe 6, das Übertragungsgetriebe 7, das Differentialziffer 14 und/oder zumindest einen Teil der zweiten Antriebswelle 5. Hierfür ist der Innenraum 16 des Achskörpers 15 im Bereich des Zwischenabschnitts 19, insbesondere bezüglich seiner Breite und/oder Höhe, Größe ausgebildet als im Bereich seiner beiden Außenabschnitte 17, 18.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichen

- 1.: Starrachsenanordnung
- 2.: Elektromotor
- 3.: Getriebeeinheit
- 4.: erste Antriebswelle
- 5.: zweite Antriebswelle
- 6.: Übersetzungsgetriebe
- 7.: Übertragungsgetriebe
- 8.: Wellendrehachse
- 9.: Motordrehachse
- 10.: erstes freies Ende
- 11.: zweites freies Ende
- 12.: erste Rad
- 13.: zweites Rad
- 14.: Differential
- 15.: Achskörper
- 16.: Innenraum
- 17.: erster Außenabschnitt
- 18.: zweiter Außenabschnitt
- 19.: Zwischenabschnitt
- 20.: Gehäuse

## Patentansprüche

1. Starrachsenanordnung (1), insbesondere für eine antreibbare Hinterachse eines Kraftfahrzeugs, mit einem Elektromotor (2), einer Getriebeeinheit (3), zwei sich in Fahrzeugquerrichtung zwischen einem dafür vorgesehenen ersten und zweiten Rad (12, 13) erstreckenden Antriebswellen (4, 5), die über ein Differential (14) miteinander verbunden und im Bereich ihres jeweils freien Endes (10, 11) drehfest mit dem dafür vorgesehenen Rad (12, 13) verbindbar sind, und einem sich in Fahrzeugquerrichtung zwischen den beiden Rädern (12, 13) erstreckenden Achskörper (15), der in seinem Innenraum (16) die beiden Antriebswellen (4, 5) drehbar aufnimmt, **dadurch gekennzeichnet, dass** sich der Achskörper (15) in Fahrzeugquerrichtung vom Bereich des freien Endes (10) der einen Antriebswelle bis in den Bereich des freien Endes (11) der anderen Antriebswelle einteilig - d.h. ohne form-, stoff- und/oder kraftschlüssige Verbindungsbereiche - erstreckt und in seinem Innenraum (16) den Elektromotor (2), die Getriebeeinheit (3) und das Differential (14) aufnimmt.

2. Starrachsenanordnung nach dem vorherigen Anspruch, **dadurch gekennzeichnet, dass** der Achskörper (15) einen, insbesondere rohrförmigen, ersten und zweiten Außenabschnitt (17, 18) aufweist, in denen jeweils eine der Antriebswellen (4, 5) zumindest teilweise aufgenommen ist, wobei die Außenabschnitte (17, 18) vorzugsweise zueinander koaxial ausgebildet sind.

3. Starrachsenanordnung nach einem oder mehreren der vorherigen Ansprüche, **dadurch gekennzeichnet, dass** der Achskörper (15) einen Zwischenabschnitt (19) aufweist, in dem der Elektromotor (2), die Getriebeeinheit (3) und das Differential (14) angeordnet sind.

4. Starrachsenanordnung nach einem oder mehreren der vorherigen Ansprüche, **dadurch gekennzeichnet, dass** der Zwischenabschnitt (19) in Fahrzeugquerrichtung, insbesondere im Wesentlichen fahrzeugmittig, zwischen den beiden Außenabschnitten (17, 18) angeordnet ist.

5. Starrachsenanordnung nach einem oder mehreren der vorherigen Ansprüche, **dadurch gekennzeichnet, dass** der Innenraum (16) des Achskörpers (15) im Bereich des Zwischenabschnitts (19) eine größere Breite und/oder Höhe aufweist als im Bereich der Außenabschnitte (17, 18).

## Claims

1. Beam axle arrangement (1), in particular for a drivable rear axle of a motor vehicle, having an electric motor (2), a transmission unit (3), two drive shafts (4, 5) which extend in the vehicle transverse direction between a first and second wheel (12, 13) which are provided for this purpose, which drive shafts (4, 5) are connected to one another via a differential (14) and can be connected in the region of their respective free end (10, 11) fixedly to the wheel (12, 13), which is provided for this purpose, so as to rotate with it, and an axle beam (15) which extends between the two wheels (12, 13) in the vehicle transverse direction and receives the two drive shafts (4, 5) rotatably in its interior space (16), **characterized in that** the axle beam (15) extends in the vehicle transverse direction in one piece, that is to say without positively locking, integrally joined and/or non-positive connecting regions, from the region of the free end (10) of the one drive shaft as far as into the region of the free end (11) of the other drive shaft, and the said axle beam (15) receives the electric motor (2), the transmission unit (3) and the differential (14) in its interior space (16).

2. Beam axle arrangement according to the preceding claim, **characterized in that** the axle beam (15) has a first and second outer section (17, 18) which are, in particular, tubular and in which in each case one of the drive shafts (4, 5) is received at least partially, the outer sections (17, 18) preferably being configured coaxially with respect to one another.

3. Beam axle arrangement according to one or both of the preceding claims, **characterized in that** the axle beam (15) has an intermediate section (19), in which the electric motor (2), the transmission unit (3) and the differential (14) are arranged.

4. Beam axle arrangement according to one or more of the preceding claims, **characterized in that** the intermediate section (19) is arranged between the two outer sections (17, 18) in the vehicle transverse direction, in particular substantially in the centre of the vehicle.

5. Beam axle arrangement according to one or more of the preceding claims, **characterized in that** the interior space (16) of the axle beam (15) has a greater width and/or height in the region of the intermediate section (19) than in the region of the outer sections (17, 18).

## Revendications

1. Ensemble d'essieux rigides (1), en particulier pour un essieu arrière, pouvant être entraîné, d'un véhicule automobile, comprenant un moteur électrique (2), une unité de transmission (3), deux arbres d'entraînement (4, 5) s'étendant dans la direction transversale du véhicule entre une première et une deuxième roue (12, 13) prévues à cet effet, qui sont connectés l'un à l'autre par le biais d'un différentiel (14) et qui peuvent être connectés de manière solidaire en rotation à la roue prévue à cet effet (12, 13) dans la région de leur extrémité libre respective (10, 11), et un corps d'essieu (15) s'étendant dans la direction transversale du véhicule entre les deux roues (12, 13), qui reçoit dans son espace interne (16) de manière rotative les deux arbres d'entraînement (4, 5), **caractérisé en ce que** le corps d'essieu (15) s'étend dans la direction transversale du véhicule depuis la région de l'extrémité libre (10) de l'un des arbres d'entraînement jusque dans la région de l'extrémité libre (11) de l'autre arbre d'entraînement et ce d'une seule pièce, c'est-à-dire sans régions de connexion par engagement par correspondance de formes, par liaison de matière et/ou par force, et reçoit dans son espace intérieur (16) le moteur électrique (2), l'unité de transmission (3) et le différentiel (14).

2. Ensemble d'essieux rigides selon la revendication précédente, **caractérisé en ce que** le corps d'essieu (15) présente une première et une deuxième portion extérieure (17, 18) notamment de forme tubulaire, dans lesquelles est reçu au moins en partie à chaque fois l'un des arbres d'entraînement (4, 5), les portions extérieures (17, 18) étant réalisées de préférence coaxialement l'une à l'autre.

3. Ensemble d'essieux rigides selon l'une quelconque ou plusieurs des revendications précédentes, **caractérisé en ce que** le corps d'essieu (15) présente une portion intermédiaire (19) dans laquelle sont reçus le moteur électrique (2), l'unité de transmission (3) et le différentiel (14).

4. Ensemble d'essieux rigides selon l'une quelconque ou plusieurs des revendications précédentes, **caractérisé en ce que** la portion intermédiaire (19) est disposée dans la direction transversale du véhicule, en particulier essentiellement au centre du véhicule, entre les deux portions extérieures (17, 18).

5. Ensemble d'essieux rigides selon l'une quelconque ou plusieurs des revendications précédentes, **caractérisé en ce que** l'espace interne (16) du corps d'essieu (15) dans la région de la portion intermédiaire (19) présente une plus grande largeur et/ou hauteur que dans la région des portions extérieures (17, 18).
